# DEMANDE DE BREVET EUROPEEN

(11) **EP 1 047 249 A1**
(43) Date de publication de la demande: **25.10.2000**
(21) Numéro de dépôt: 00401005.4
(22) Date de dépôt: 11.04.2000
(51) Int. Cl.: H04M 1/60

(54) **Système d'écoute amplifiée et procédé de téléphonie mobile mains libres**

(30) Priorité: 20.04.1999 FR 9905429
(71) Demandeur: SAGEM S.A., 75116 Paris (FR)
(72) Inventeur: Rigaudias, Thierry, 75017 Paris (FR)
(74) Mandataire: Schmit, Christian Norbert Marie

(57) **Abrégé**

On dote un téléphone (100) mobile de moyens (112) de diffusion radiophonique de manière à ce que l'on puisse écouter sur un récepteur (103) de radiodiffusion les paroles d'un interlocuteur distant avec lequel le téléphone mobile est connecté. De plus le téléphone mobile est aussi doté de moyen d'émission de signaux RDS afin de pouvoir basculer sur une fréquence, prévue à l'avance, à laquelle va avoir lieu l'émission radiophonique du téléphone mobile. Ainsi, dans une automobile par exemple, lors de la réception d'un appel entrant et en mode main libre, si l'utilisateur du téléphone mobile décide de décrocher, le téléphone mobile envoi un message RDS qui signifie à l'autoradio qu'il doit s'accorder sur la fréquence prédéfinie. La communication s'établit alors et la voix de l'interlocuteur distant est diffusée par le circuit audio de l'automobile.

## Description

La présente invention a pour objet un système d'écoute amplifiée et un procédé de téléphonie mobile mains libres. Le domaine d'application de l'invention est la téléphonie mobile, mais il peut s'étendre à tous les appareils dont la destination est de restituer des sons alors que les utilisateurs de ces appareils jouissent d'une liberté de mouvement réduite. Le but de l'invention est de permettre à un conducteur d'une voiture par exemple de suivre une conversation téléphonique de manière satisfaisante et sans nuire aux actions qu'il a à effectuer pour la conduite de son véhicule. L'invention a aussi pour but de réduire l'encombrement des kits mains libres.

A l'heure actuelle les kits mains libres se composent d'un téléphone mobile et de différents accessoires destinés à fixer le téléphone mobile et à améliorer ses performances acoustiques. Le cas le plus simple est celui d'un téléphone mobile utilisé seul avec une enceinte d'amplification. Dans ce cas ils se posent des problèmes de puissance, de saturation du signal, d'autonomie de la batterie et de technologie. En effet de par son faible volume le téléphone mobile ne peut pas comporter une enceinte suffisamment grande pour passer toute la puissance de son amplification. Lors d'une écoute amplifiée à volume maximum il y a donc un problème de distorsion qui se produit, ce qui nuit fortement au confort d'écoute. De plus dans un environnement bruité un tel dispositif n'est pas toujours suffisant. Ce dispositif peut être améliorée par l'adjonction devant le téléphone mobile d'un cornet acoustique. On obtient ainsi un son de meilleure qualité, mais la source sonore est alors directive et il n'y a qu'une personne qui puisse suivre la conversation de manière satisfaisante.

Dans une variante le téléphone mobile est relié par un câble à un système d'amplification muni d'un système acoustique. Le système acoustique et l'enceinte sont alors correctement dimensionnés pour que tous les occupants du véhicule puissent profiter de la communication. Le problème de ce système est son encombrement et sa consommation.

Une troisième solution consiste à prévoir que le téléphone mobile puisse être relié de manière hertzienne à un casque. Le casque est alors composé d'un écouteur et d'un microphone maintenu par un arceau sur la tête du conducteur ou du passager qui souhaite suivre la conversation. Le problème de ce système est qu'une seule personne peut suivre la conversation. De plus si cette personne est le conducteur elle se retrouve coupée du monde extérieur. En effet le fait d'avoir des écouteurs sur les oreilles atténue les sons en provenance de l'extérieur, et ainsi prive le conducteur d'informations importantes nécessaires à la bonne conduite du véhicule.

L'invention résout ces problèmes en établissant une liaison hertzienne entre un téléphone mobile et un récepteur de radiodiffusion. Le récepteur de radiodiffusion peut être, par exemple, un autoradio dans un véhicule. De plus si le récepteur de radiodiffusion est doté de capacités RDS, l'invention prévoit que la seule action qu'ait à faire le destinataire d'un appel téléphonique pour établir la communication est de décrocher, voire aucune action dans le cas ou le téléphone mobile utilisé comporte l'option de décrochage automatique. C'est le téléphone mobile qui se charge alors, via des messages RDS de régler le récepteur de radiodiffusion sur la bonne fréquence.

L'invention a donc pour objet un système d'écoute amplifié comportant un téléphone mobile caractérisé en ce qu'il comporte un récepteur de radiodiffusion pour diffuser des sons, et en ce que le téléphone mobile comporte des moyens pour émettre un signal radiophonique.

L'invention a aussi pour objet un procédé de téléphonie mobile mains libres dans lequel :
- on reçoit sur le téléphone mobile un signal radiofréquence indiquant un appel entrant d'un interlocuteur distant,
- on configure le téléphone en mode main libre,
- on reçoit, sur le téléphone, des signaux radiofréquence correspondant à la voix de l'interlocuteur distant,
caractérisé en ce que :
- on place un téléphone mobile à proximité immédiate d'un récepteur de radiodiffusion supportant les messages de type RDS,
- on émet, depuis le téléphone mobile, un signal radiophonique de type RDS sur une fréquence paramétrée à l'avance,
- on convertit les signaux radiofréquence de voix en signaux radiophonique de voix puis on les émet.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration des éléments importants d'un dispositif selon l'invention ;
- Figure 2 : une illustration des étapes du procédé selon l'invention ;
- Figure 3 : une illustration de la répartition des informations dans les canaux fréquenciels utilisés par l'invention.

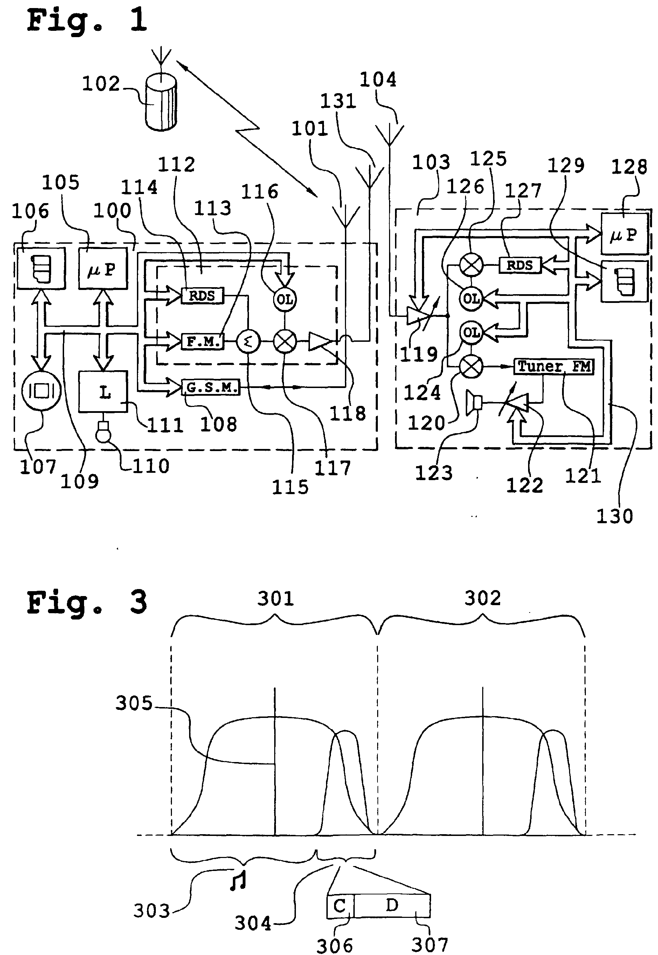

La figure 1 montre un téléphone mobile 100 connecté par un aérien 101 à une station de base 102. Le téléphone 100 émet aussi via un aérien 131 un signal radiophonique en direction d'un récepteur 103 de radiodiffusion. Le récepteur 103 reçoit les signaux radiophoniques diffusés par le téléphone 100 grâce à un aérien 104.

Le téléphone 100 comporte des moyens standards que l'on retrouve dans tous les téléphones mobiles comme un microprocesseur 105, une mémoire 106, un oscillateur 107 et un circuit GSM 108. Les éléments 106 à 108 sont reliés entre par un bus 109. Le bus 109 comporte tous les signaux nécessaires à la gestion des moyens du téléphone 100 mobile à savoir, des signaux de données, des signaux d'adresse et des signaux de commande. La mémoire 106 comporte tous les programmes nécessaires à la réalisation d'une activité de téléphonie mobile telle qu'elle est connue en général. Ces programmes sont exécutés par le microprocesseur 105. Le circuit 108 module les données que souhaite émettre l'utilisateur du téléphone mobile que ce soit de la voix ou des données transmises par une connexion avec un ordinateur par exemple, ou démodule les données reçues via l'aérien 101 pour les mettre à la disposition du microprocesseur 105. Dans l'exemple choisi on a choisi un circuit GSM, mais la description reste valide s'il s'agit de la norme PCS ou DCS par exemple. L'oscillateur 107 cadence l'activité du microprocesseur 105, mais il est aussi utile pour le circuit 108, pour générer les fréquences intermédiaires nécessaires à son activité. Dans cette exemple on a représenté qu'un seul oscillateur, mais il peut très bien y en avoir plusieurs. De même le signal de l'oscillateur passe par le bus 109, ce qui n'est pas toujours le cas.

La figure 1 montre aussi un microphone 110 connecté au bus 109 via un filtre 111. Le micro 110 est du type standard que l'on retrouve sur tous les téléphones mobiles du marché. Le filtre 111 est présent pour améliorer la qualité de l'invention. Le filtre 111 est un filtre limiteur d'effets Larsen de type connu. Il faut en effet éviter que le téléphone 100 ne réémette les sons qu'il a reçus par l'intermédiaire de son aérien 131. Cela pourrait perturber l'interlocuteur distant, et dans le pire cas créer des distorsions de type effet Larsen.

Le téléphone 100 comporte aussi des moyens 112 de constitution de signaux radiophonique à radiodiffuser. Ces signaux peuvent être dans n'importe quelle bande autorisée par le gouvernement sur le territoire duquel l'appareil est employé. Dans un exemple préféré il s'agit de la bande de modulation de fréquences dite FM, qui s'étend de 87 à 107 MHz. Les moyens 112 comportent un générateur 113 de signaux FM. Le générateur 113 est connecté au bus 109. Il reçoit de la part du microprocesseur 105 des échantillons numériques qu'il va convertir en signaux modulés. Les moyens 112 comportent aussi un générateur 114 de signaux de type RDS. Le générateur 114 reçoit de la part du microprocesseur 105 par le bus 109 des échantillons numériques qui vont être mis en forme selon la norme RDS. Les signaux issus des générateurs 113 et 114 sont ensuite additionnés par un additionneur 115. Le signal issu de l'additionneur 115 est transmis à une première entrée d'un mélangeur 117. Une deuxième entrée du mélangeur 117 est connectée à un oscillateur local 116.

Le mélangeur 117 est chargé de translater les signaux issus de l'additionneur 115 dans la bande souhaitée. L'oscillateur local 116 peut être un oscillateur de type quartz mais dans la pratique on préférera générer un signal oscillant à partir d'un des oscillateurs à quartz déjà présent dans le téléphone 100. Cela permet d'économiser la place et le coût d'un quartz. La fréquence délivrée par l'oscillateur 116 est variable. On peut faire varier cette fréquence de manière mécanique, par la rotation d'une vis par exemple qui va faire varier une capacité dans un oscillateur de type oscillateur RC, donc la fréquence de l'oscillateur. Soit par une interface du type de celle que l'on retrouve sur le récepteur de radiodiffusion de véhicule. Dans ce cas la fréquence de l'oscillateur 116 est choisie par l'intermédiaire du clavier et d'un écran du téléphone 100, ces deux éléments ne sont pas représentés mais sont présents dans tous les téléphones mobiles. En fonction de la sélection d'une fréquence le microprocesseur 105 se chargera de l'asservissement de l'oscillateur 116, d'une manière connue, afin que celui-ci délivre un signal à la fréquence souhaitée.

Les signaux issus du mélangeur 117 sont émis par l'aérien 131 via un atténuateur 118. Ces signaux sont émis dans un canal ayant une largeur donnée dans la bande FM. La figure 3 montre un premier canal 301 et un second canal 302. Le canal 301 comporte des signaux 303 de voix et des signaux 304 de type RDS. Les signaux 304 sont situés en bord de canal. Un canal est caractérisé par sa fréquence 305 centrale sur laquelle est accordée le récepteur de radiodiffusion qui souhaite démoduler les signaux portés par cette fréquence. Une fois démodulés les signaux 304 RDS comportent des informations numériques. Les informations contenues dans le signal 304 comporte un champ 306 de code et un champ 307 de données. Le champ 306 indique la nature et ce qu'il faut faire avec les informations contenues dans le champ 307. Le champ 306 peut aussi signifier au récepteur qu'il a une action à effectuer, dans ce cas le champ 307 n'est pas forcément renseigné. Les signaux contenus dans le canal 302 sont identiques à ceux décrits pour le canal 301. La bande FM contient de nombreux canaux.

L'atténuateur 118 n'est utile que si les signaux délivrés par le mélangeur 117 sont trop forts. Dans la pratique on préférera dimensionner les générateurs 113 et 114 afin qu'ils délivrent les signaux ayant la bonne puissance. Néanmoins l'atténuateur 118 rappelle que les signaux FM qui sont émis par le téléphone 100 ne doivent pas être trop forts. En effet ils sont destinés à être captés par un autoradio d'un utilisateur d'un téléphone mobile selon l'invention, et pas par celle de tous les utilisateurs qui se trouvent dans les environs du téléphone mobile. Pour cette raison il faut que le téléphone mobile se trouve à proximité d'un récepteur de radiodiffusion qui doit diffuser les sons qui sont émis dans un canal FM par le téléphone mobile, et que la puissance émise en FM par le téléphone mobile ne dépasse pas 10 microwatts.

La figure 1 montre que le récepteur 103 contient un amplificateur 119 branché derrière l'aérien 104 et dont le but est d'amplifier les signaux reçus par l'aérien 104 afin que ceux-ci puissent être traités correctement par les circuits qui suivent l'amplificateur 119. La sortie de l'amplificateur 119 est connectée à une première entrée d'un premier mélangeur 120. La deuxième entrée du mélangeur 120 est connectée à un oscillateur 124 local. La sortie du mélangeur 120 est connectée à un tuner 121 FM. Le rôle de l'oscillateur 124 est de choisir la fréquence qui sera démodulée par le tuner 121 FM. La sortie du tuner 121 est connectée à un haut-parleur 123 par l'intermédiaire d'un amplificateur 122. Ce sont les éléments 119 à 124 qui permettent au diffuseur 103 de diffuser acoustiquement les signaux radioélectriques qu'il reçoit par l'aérien 104. Le volume de cette diffusion peut être réglée en agissant sur le gains de l'amplificateur 122.

La sortie de l'amplificateur 119 est aussi connectée à une première entrée d'un mélangeur 125. Une deuxième entrée du mélangeur 125 est connectée à un oscillateur 126. La sortie du mélangeur 125 est connectée à un circuit 127 de décodage d'informations de type RDS. Le récepteur 103 comporte aussi un microprocesseur 128 et une mémoire 129. Les éléments 19, 127, 128, 129, 121 et 122 sont connectés par un bus 130. Le récepteur 103 comporte aussi, mais non représenté, un clavier et un écran. Ce sont ce clavier et cet écran qui permettent à l'utilisateur de paramétrer le récepteur 103.

Les récepteurs de radiodiffusion modernes, lorsqu'ils sont branchés, scrutent en permanence des bandes de fréquence qu'ils peuvent recevoir. C'est le microprocesseur 128 qui se charge de cette scrutation, commandée par un programme contenue dans la mémoire 129. Le microprocesseur 128 agit sur l'oscillateur 126 de manière à ce que la fréquence qu'il délivre change régulièrement et corresponde successivement aux différents canaux de la bande de fréquence qu'il scrute. Pour chaque fréquence le microprocesseur 128 écoute la sortie du circuit 127 et détermine s'il s'agit de signaux cohérents ou pas, c'est-à-dire de signaux qui ont un sens ou n'en ont pas. Si les signaux ont un sens le microprocesseur va interpréter le code contenu dans ces signaux. Dans la pratique un récepteur FM scrute toute la bande FM trois fois par seconde.

Un utilisateur du récepteur 103 utilise le clavier et l'écran commandé par le microprocesseur 128, pour régler la fréquence de l'oscillateur 124. Cela lui permet de choisir la fréquence qu'il souhaite écouter. De même, c'est ce clavier qui permet à l'utilisateur de régler le volume auquel le récepteur de radiodiffusion va diffuser les sons contenus dans les signaux de voix de la fréquence sur laquelle ce récepteur est accordé via l'oscillateur 124. Ce réglage de volume est effectué, après saisie au clavier, par une action du microprocesseur 128 sur l'amplificateur 122. Lors de sa scrutation le microprocesseur 128 va rencontrer la fréquence sur laquelle est accordée l'oscillateur 124. C'est ce qui lui permet d'afficher sur l'écran le nom de la station que l'utilisateur écoute, en décodant les informations contenues dans les signaux RDS du canal FM écouté.

Dans la pratique un téléphone mobile selon l'invention sera utilisé avec un récepteur de radiodiffusion d'une automobile. Mais il pourra aussi être utilisé avec tous les récepteurs de radiodiffusion supportant la norme RDS. Ainsi il est possible de diffuser une conversation téléphonique en utilisant un récepteur de radiodiffusion de salon répondant à la norme Hi-Fi par exemple.

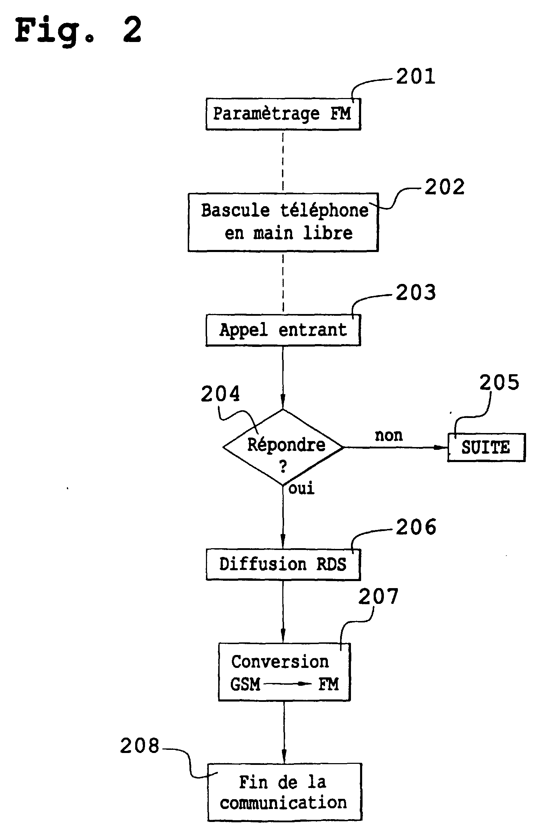

La figure 2 montre une première étape préliminaire 201 de paramétrage de la fréquence mains libres dite fréquence FmI. Il s'agit du paramétrage sur un téléphone mobile selon l'invention, de la fréquence à laquelle le téléphone émet des signaux FM. Ce paramétrage se fait soit par l'emploi d'une vis, soit par l'utilisation d'une interface homme-machine mise en oeuvre grâce à un clavier et un écran du téléphone mobile.

Dans une deuxième étape 202 préliminaire, l'utilisateur bascule son téléphone mobile en mode mains libres. Cette opération s'effectue soit par la pression sur un bouton ou sur un interrupteur prévu à cet effet, soit par une interface mise en oeuvre par l'écran et le clavier. Une fois que le téléphone est basculé en mode mains libres, il n'émettra plus de sons de voix par son haut-parleur, ces sons seront transformés en signaux FM, puis émis par son aérien.

On passe à une étape 203 de réception d'un appel entrant. Dans cette étape le téléphone mobile reçoit du réseau auquel il est connecté une information lui indiquant que quelqu'un cherche à le joindre. Il émet alors une sonnerie pour que son utilisateur en soit averti. On est dans une étape 204 dans laquelle l'utilisateur doit choisir de répondre ou de ne pas répondre. Si l'utilisateur choisit de ne pas répondre, il peut laisser son téléphone sonner jusqu'à ce que la personne qui cherche à le joindre se lasse ou que l'opérateur bascule son correspondant sur un répondeur vocal. Ou l'utilisateur peut appuyer sur une touche d'annulation de l'appel. Dans les deux cas on passe à une étape 205 de suite connue. Si l'utilisateur choisit de répondre, il appuie sur une touche prédéterminée correspondant à la validation de l'appel et on passe alors à une étape 206 de diffusion RDS. Confronté à un appel entrant, l'utilisateur n'a qu'une action à effectuer, appuyer sur un bouton. Dans le cadre d'une utilisation en voiture, en général, le téléphone sera solidement fixé à proximité du récepteur de radiodiffusion de l'automobile. Le conducteur et utilisateur du téléphone mobile pourra donc presser sur le bouton adéquat sans être distrait de sa conduite. De plus si le téléphone est doté de capacité de décrochage automatique, il a suffi à l'utilisateur de le configurer dans ce mode. Ainsi lorsque le téléphone sonne, l'utilisateur n'a qu'à attendre le décrochage et à parler.

Dans l'étape 206 le téléphone mobile va diffuser un message de type RDS signifiant l'arrivée d'un appel entrant. Dans la pratique ce message est du type flash d'information. Le récepteur de radiodiffusion va recevoir ce message RDS. En effet le récepteur scrute la bande trois fois par seconde. Le récepteur décode le message de type RDS, constate qu'il s'agit d'un message de type flash d'information et se cale sur la fréquence correspondant au flash d'information, la communication peut alors commencer. On passe à une étape 207 de conversion GSM vers FM.

Dans l'étape 207 le téléphone reçoit des signaux radiofréquences depuis une station de base. Il va convertir ces signaux radiofréquence par son circuit GSM, puis transmettre ces signaux convertis au circuit FM. Le circuit FM va alors transmettre les signaux modulés à l'aérien 101. La conversion est effectuée. Le récepteur de radiodiffusion reçoit ces signaux convertis et les diffuse sur le circuit acoustique du véhicule dans lequel il se trouve. Au bout d'un temps plus ou moins long, et ne dépendant que de la bonne volonté des personnes en communication, on passe à une étape 208 de fin de la communication.

Dans l'étape 208 l'une des deux personnes en communication décide de mettre fin à la communication. Si c'est l'utilisateur du téléphone mobile selon l'invention, il n'a qu'à appuyer sur un bouton pour raccrocher. Sinon il n'y a rien à faire.

Dans une variante de l'invention, et pour limiter les possibilités d'écoute indiscrète, on envisage pendant l'étape 207 une agilité en fréquence. Pour ce faire, on a besoin d'un code mains libres paramétré dans le téléphone mobile et dans le récepteur de radiodiffusion. Une fois ce code paramétré et une conversation établie en mode mains libres, le téléphone va régulièrement émettre au cours de la communication des messages RDS à des fréquences prédéterminées. Ces messages contiendront le code mains libres. Peu de temps après l'émission de ce message, environ une demi-seconde, le téléphone mobile va émettre ces signaux FM à cette nouvelle fréquence prédéterminée.

Dès la réception du message RDS le récepteur de radiodiffusion va comparer le code qu'il contient au code pour lequel il a été paramétré si ce code correspond, il bascule le récepteur pour qu'il soit accordé sur cette fréquence. Ainsi la communication se poursuivra mais sur une autre fréquence.

Ce système n'est utile que si la puissance d'émission des signaux FM est trop puissante, et permet à un utilisateur de récepteur de diffusion radiophonique voisin de capter les signaux émis. Dans ce cas comme le voisin n'a pas connaissance du code mains libres de l'utilisateur du téléphone mobile selon l'invention, ce dernier ne pourra que très difficilement, suivre les sauts de fréquence.

## Revendications

1. Téléphone (100) mobile comportant un système d'écoute amplifié caractérisé en ce qu'il comporte un récepteur (103) de radiodiffusion pour diffuser des sons, et en ce que le téléphone mobile comporte des moyens (112) numériques pour produire et émettre un signal radiophonique et un signal RDS de commande du récepteur de radiodiffusion.

2. Téléphone selon la revendication 1, caractérisé en ce qu'il comporte une chaîne (113 à 118) de constitution de signaux radiophoniques, et délivrant des signaux radiophoniques de faible puissance, de préférence moins de 10 microwatts, vers un aérien (131).

3. Téléphone selon l'une des revendications 1 ou 2, caractérisé en ce qu'il comporte des moyens (114) pour constituer un message de type RDS, et en ce que le récepteur comporte des moyens (127) pour décoder ce message et pour s'accorder sur un canal correspondant à ce message.

4. Téléphone selon l'une des revendications 1 à 3, caractérisé en ce qu'il comporte un filtre (111), limitant un effet Larsen, connecté en série avec un microphone (110) du téléphone.

5. Téléphone selon l'une des revendications 1 à 4, caractérisé en ce qu'il comporte un moyen pour modifier manuellement une fréquence d'émission du signal radiophonique.

6. Téléphone selon l'une des revendications 1 à 5, caractérisé en ce que les moyens pour émettre un signal de radiophonique comporte un modulateur (113) recevant un signal d'oscillation local obtenu grâce à un oscillateur (107) local utilisé par le téléphone mobile.

7. Téléphone selon l'une des revendications 1 à 6, caractérisé en ce que le récepteur de radiodiffusion, pour lequel le téléphone émet un signal de radiodiffusion, est un récepteur de véhicule automobile.

8. Procédé de téléphonie mobile mains libres dans lequel :
- on reçoit sur le téléphone mobile un signal radiofréquence indiquant un appel entrant d'un interlocuteur distant,
- on configure le téléphone en mode main libre,
- on reçoit, sur le téléphone, des signaux radiofréquence correspondant à la voix de l'interlocuteur distant,
caractérisé en ce que :
- on place un téléphone mobile à proximité immédiate d'un récepteur de radiodiffusion supportant les messages de type RDS,
- on émet, depuis le téléphone mobile, un signal radiophonique de type RDS sur une fréquence paramétrée à l'avance,
- on convertit les signaux radiofréquence de voix en signaux radiophonique de voix puis on les émet.

9. Procédé selon la revendication 8, caractérisé en ce que :
- on reçoit dans le récepteur radio le message de type RDS et on adapte la fréquence de réception du récepteur en fonction du message,
- on reçoit dans le récepteur radio le signal radiophonique de voix et on le diffuse acoustiquement.

10. Procédé selon l'une des revendications 8 ou 9, caractérisé en ce que:
- on mémorise un code main libre dans le récepteur radio,
- on mémorise le même code main libre dans le téléphone mobile,
- on émet, depuis le téléphone mobile et à intervalle régulier, un signal radiophonique de type RDS à une fréquence prédéterminée, ce signal contient le code main libre,
- on reçoit, sur le récepteur radio, un signal radiophonique de type RDS, on extrait le code main libre, on compare ce code à celui paramétré dans le récepteur, et s'ils sont identiques on règle la fréquence de réception du récepteur radio à la fréquence correspondant au message radiophonique de type RDS reçu.

11. Procédé selon la revendication 10, caractérisé en ce que la fréquence prédéterminée change à chaque intervalle.
